# EUROPÄISCHE PATENTSCHRIFT

(11) **EP 4 143 512 B1**
(45) Veröffentlichungstag und Bekanntmachung des Hinweises auf die Patenterteilung: **03.09.2025**
(21) Anmeldenummer: 21722180.3
(22) Anmeldetag: 26.04.2021
(51) Int. Cl.: G01D 5/25

(54) **VORRICHTUNG ZUR STELLUNGSERFASSUNG BEI HYDRAULISCHEN ODER ELEKTROHYDRAULISCHEN ANTRIEBEN SOWIE ANTRIEB MIT STELLUNGSERFASSUNGSMITTEL**
POSITION SENSING DEVICE FOR HYDRAULIC OR ELECTROHYDRAULIC DRIVES, AND DRIVE HAVING POSITION SENSING MEANS
DISPOSITIF DE DÉTECTION DE POSITION DESTINÉ À DES ENTRAÎNEMENTS HYDRAULIQUES OU ÉLECTRO-HYDRAULIQUES, ET ENTRAÎNEMENT DOTÉ D'UN MOYEN DE DÉTECTION DE POSITION

(30) Priorität: 30.04.2020 DE 102020111817
(43) Veröffentlichungstag der Anmeldung: 08.03.2023
(73) Patentinhaber: Pleiger Maschinenbau Gmbh & Co. KG, 58456 Witten (DE)
(72) Erfinder: HABERS, Annika, 44789 Bochum (DE); RESKA, Georg, 58453 Witten (DE)
(74) Vertreter: Rings, Rolf
(86) Internationale Anmeldenummer: PCT/EP2021/060844
(87) Internationale Veröffentlichungsnummer: WO 2021/219553

(56) Entgegenhaltungen:
- WO-A1-2019/111801
- DE-A1- 102017 102 639
- DE-A1- 19 600 687
- DE-A1- 2 912 913
- US-A- 4 504 832

## Beschreibung

Die vorliegende Erfindung betrifft eine Vorrichtung zur Stellungserfassung einer Drehstellung oder einer Linearstellung von beweglichen Teilen von Antrieben, insbesondere von hydraulischen oder elektrohydraulischen Antrieben, welche auch unter extremen Umgebungsbedingungen, wie zum Beispiel sehr tiefen Temperaturen und bei einer Explosionsgefahr, funktionssicher sind. Die erfindungsgemäße Stellungserfassungsvorrichtung bezieht sich insbesondere auf hydraulische Antriebe mit einem beweglichen Teil, welches eine Drehbewegung oder eine lineare Verstellbewegung über einen vordefinierten Stellweg hinweg ausführt, wobei die Drehstellung oder Linearstellung des beweglichen Teils mit der erfindungsgemäßen Vorrichtung möglichst genau erfasst wird. Derartige Vorrichtungen zur Stellungserfassung werden auch als Sensoren oder Positionsgeber für die Lage von derartigen Antrieben mit beweglichen Teilen, wie Drehwellen oder Antriebsstangen, bezeichnet.

Im Stand der Technik ist beispielsweise für die Erfassung von Drehstellungen derartiger Antriebe oder Armaturen die Verwendung von Potentiometern oder anderen, die Rotationslage durchgängig erfassenden Sensoren bekannt. Mit solchen Potentiometern werden kontinuierlich die jeweiligen Stellungen der beweglichen Teile der Antriebe erfasst und zur Weiterverarbeitung ausgegeben. Bei vielen hydraulischen Antrieben, beispielsweise für die Verwendung der Betätigung von Klappen, Kugelhähnen oder ähnlichem, werden solche die komplette Stellbewegung erfassenden Potentiometer üblicherweise verwendet. Sie sind also präzise, aber auch häufig störungsanfällig. Andererseits ist es auch bekannt, nur die jeweilige Endstellung eines Stellwegs derartiger hydraulischer Antriebe mit entsprechenden Positionsendschaltern zu erfassen, wobei dann die Information über die relative Lage in den Zwischenpositionen des Stellwegs zwischen einer Ausgangslage und einer Endlage fehlt. Dies führt zu Nachteilen und Einschränkungen hinsichtlich der Steuerung und Regelung von solch hydraulisch angetriebenen Armaturen.

Es gibt zudem auch Anwendungsgebiete, bei welchen die Erfassung der Stellung derartiger beweglicher Teile von Antrieben nicht mit den elektrischen Potentiometern mehr möglich ist bzw. häufig zu Ausfällen und damit einer recht ungenauen Steuerung und Regelung der Antriebe führt. Beispielsweise bei sehr tiefen Temperaturen in der Polarzone bei bis zu -55° C sind hydraulische Antriebe für die Betätigung von Klappen, Ventilen oder Kugelhähnen in der Regel noch vollständig funktionsfähig, können jedoch oft nicht mehr ausreichend genau geregelt oder gesteuert werden, da die Information über die relative Lage der beweglichen Antriebsteile wie Wellen oder Stellstangen fehlt. Die relative Stellung der beweglichen Teile von einer Drehwelle für eine Drehbewegung oder einer linear verstellbaren Einheit kann dann häufig nicht mehr hinreichend genau festgestellt werden. Es ergeben sich häufig bei extremen Temperaturen auch Unterschiede in der genauen Position der beweglichen Teile der Antriebe aufgrund der sich ändernden Viskosität des Hydrauliköls oder den sich ändernden Umgebungsbedingungen. Auch bei anderen sehr schwierigen Umgebungsbedingungen, wie zum Beispiel einer hohen Temperatur, einer Explosionsgefahr oder dergleichen sowie bei einer Kombination dieser, sind die herkömmlichen rein elektrischen Stellungssensoren, wie Potentiometer, häufig nicht mehr voll funktionsfähig. Es kann dann einerseits zu Ausfällen kommen, so dass gar keine Stellungserfassung mehr möglich ist. Andererseits kann es auch zu sehr ungenauen Angaben bei der Erfassung der Drehstellung oder genauen Lage eines verstellbaren beweglichen Teils der Antriebe und damit falsch eingestellten Armaturen wie Klappen oder Kugelhähnen mit entsprechenden Folgeschäden kommen.

Vor diesem Hintergrund ist es die Aufgabe der vorliegenden Erfindung, eine Vorrichtung zur Stellungserfassung einer Drehstellung oder einer Linearstellung von beweglichen Teilen von hydraulischen oder elektrohydraulischen Antrieben sowie einem solchen Antrieb mit Stellungserfassungsmitteln bereitzustellen, mit welcher auch bei extremen Umgebungsbedingungen, wie zum Beispiel sehr tiefen Temperaturen von bis zu -55° C, eine sichere Erfassung und ausreichend genaue Lagefeststellung der beweglichen Teile der Antriebe in jeder Betriebsstellung ermöglicht wird. Die erfindungsgemäße Vorrichtung soll ferner eine möglichst genaue Wiedergabe der tatsächlichen Stellung und Position über einen Stellweg hinweg bei einem möglichst geringen technischen Aufwand und in vergleichsweiser kompakter Bauform ermöglichen.

Diese Aufgabe wird mit einer Vorrichtung mit den Merkmalen des Anspruchs 1 gelöst. Vorteilhafte Ausgestaltungen und Weiterbildungen der Erfindung sind Gegenstand der abhängigen Ansprüche.

Erfindungsgemäß wird eine Vorrichtung zur Stellungserfassung einer Drehstellung von beweglichen Teilen von hydraulischen oder elektrohydraulischen Antrieben mit einer Antriebswelle, vorgeschlagen, welche unter extremen Umgebungsbedingungen wie bei sehr tiefen Temperaturen und bei einer Explosionsgefahr funktionssicher sind, bei welcher ein mit der Antriebswelle verbundenes bewegliches Teil eine Drehbewegung gegenüber einem feststehenden Teil ausführt, mit einer Schaltereinheit, welche eine Mehrzahl von in einer Reihe nebeneinanderliegend angeordneten Schaltern umfasst, wobei die Schaltereinheit an dem feststehenden Teil angeordnet ist, und mit einem drehbeweglichen Betätigungselement zur direkten Betätigung der Schalter der Schaltereinheit in Abhängigkeit von der relativen Stellung des beweglichen Teils, wobei das Betätigungselement eine Mehrzahl von Schaltauslösern entsprechend der Anzahl der Schalter der Schaltereinheit aufweist, wobei die Schaltauslöser jeweils den Schaltern derart durch die Aneinanderreihung und/oder Anordnung zwischen dem beweglichen Teil und dem feststehenden Teil zugeordnet sind, dass eine jeweils festgelegte, eindeutige Kombination von Schaltstellungen der Schalter bei jeder relativen Lage zwischen dem beweglichen Teil und dem feststehenden Teil gegeben ist, dass ein Steuermodul mit einer Auswertungseinheit vorgesehen ist, in welcher eine Kodierung der unterschiedlichen Schaltstellungen von den Schaltern im Verhältnis zu der relativen Stellung des beweglichen Teils des Antriebs hinterlegt ist, dass die Schalter Schalter mit einer einfachen Schaltfunktion in Form von Wechselschaltern oder Mehrfachschaltern sind und dass das drehbewegliche Betätigungselement mechanisch mit dem beweglichen Teil im Hinblick auf die Stellbewegung des Antriebs direkt gekoppelt ist zur mechanischen Übertragung der Drehbewegung der Antriebswelle auf das Betätigungselement, so dass entsprechend der Stellbewegung des Antriebs das drehbewegliche Betätigungselement mitbetätigt wird, wobei die Schalter mit Schaltflächen oder Schaltelementen zur Verstellung mittels der Schaltauslöser in direktem Kontakt versehen sind.

Die Vorrichtung der Erfindung verwendet also eine Mehrzahl von einfachen Schaltern einer Schaltereinheit, die mit gegenüberliegend angeordneten Schaltauslösern eines Betätigungselements in Wirkverbindung stehen, um eine möglichst genaue Lageermittlung auch in Zwischenstellungen über einen Stellweg des Antriebs hinweg zu erreichen. Die Erfindung bietet so eine quasi-kontinuierliche und störungsunanfällige Stellungserfassung für solche Antriebe. Die Schaltauslöser sind so angeordnet, dass sie die verschiedenen zugeordneten Schalter der Schaltereinheit jeweils entsprechend einem vorgegebenen Schaltschema bei Verstellung des Antriebs sicher schalten können. Die Schaltauslöser sind dabei beispielsweise mit einer festgelegten Anordnung, Kontur oder Form vorgesehen, so dass die verschiedenen Schalter jeweils in einer eindeutigen festgelegten Kombination von Schaltstellungen in jeder Lage des beweglichen Teils des Antriebs miteinander verknüpft sind. Die festgelegte eindeutige Zuordnung der Kombination von Schaltstellungen zu der (tatsächlichen) relativen Stellung des beweglichen Teils des Antriebs ist in einer erfindungsgemäßen Kodierung in einem Steuermodul hinterlegt, so dass auf Basis der verschiedenen Schaltstellungen oder der Kombination von Schaltstellungen die entsprechende tatsächliche Stellung des Antriebs recht genau ohne Notwendigkeit eines elektrischen kontinuierlichen Sensors, wie eines Potentiometers, erfasst werden kann. Mit der erfindungsgemäßen Vorrichtung wird die Erfassung einer Mehrzahl von verschiedenen Stellungen des Antriebs durch das mit dem beweglichen Teil gekoppelte Betätigungselement auf konstruktiv sehr einfache und robuste Weise ermöglicht, wobei das Betätigungselement die jeweiligen Schalter über eine entsprechende Mehrzahl von Schaltauslösern unterschiedlich je nach Position entsprechend schaltet.

Durch die unterschiedlichen Schaltstellungen kann dann auf Basis der in dem Steuermodul hinterlegten Kodierung die tatsächliche Lage und Stellung an einer Mehrzahl von einzelnen diskreten Stellungspunkten eines Stellwegs und mit hoher Funktionssicherheit bestimmt werden. Die Erfindung erlaubt so eine quasi-kontinuierliche Ermittlung der relativen Position des verstellbaren beweglichen Teils des Antriebs, ohne dass eine wirklich durchgehend kontinuierliche Messung auf elektrischem Weg mit einem Potentiometer oder mit anderen derartigen Sensoren vorgesehen ist. Die einfache Verwendung von einer Reihe von Schaltern mit zugehörigen Schaltauslösern am Betätigungselement, die über gekoppelte Antriebe mit dem beweglichen Teil des hydraulischen Antriebs zusammenwirken, ist außerdem auch bei extremen Bedingungen wie sehr niedrigen Temperaturen von beispielsweise bis zu - 55° C in der Polarzone auf Schiffen oder ähnlichem immer noch funktionssicher. Mit der erfindungsgemäßen Lösung wird auch eine konstruktiv sehr einfach aufgebaute und relativ kompakte Form eines ausfallsicheren Mittels zur verbesserten Stellungserfassung bereitgestellt. Die Schalteinheit und das Betätigungselement können sehr eng beieinander mit recht geringen Abmessungen realisiert werden. Der Einbau der Vorrichtung in solche Antriebe und Armaturen ist somit erleichtert.

Eine solche erfindungsgemäße Zuordnung zwischen den Stellungen der Schalter der Schalteinheit und der relativen Lage des Antriebs kann entweder eine lineare, stetige Zuordnung sein oder aber auch eine Zuordnung, welche sich über einen Stellweg hinweg verändert. Beispielsweise können die Schaltauslöser des Betätigungselements so gebildet sein, dass über den Stellweg des hydraulischen Antriebs hinweg unterschiedlich engere oder weiter voneinander entfernte Stellungspunkte erfasst werden können. Zum Beispiel kann das Betätigungselement mit solchen Schaltauslösern gebildet sein, welche an neuralgischen, kritischen Punkten der Verstellung des Antriebs eine engere Erfassungsreihenfolge haben. Solch eine Variante der Erfindung, welche in vorteilhaften Ausführungsformen beispielsweise realisiert werden kann, kann beispielsweise dadurch hergestellt werden, dass die Schaltauslöser bzw. das Betätigungselement über ein nichtkonstantes Getriebe mit dem beweglichen Teil gekoppelt sind. Beispielsweise kann ein Getriebe über ein Rädergetriebe mit konstantem Teilkreismesser ersetzt werden durch eine variierende Übersetzung über den Teilkreisdurchmesser hinweg, beispielsweise durch exzentrisch angeordnete Rotationsachsen bezüglich der Teilkreise der Getriebeelemente. Oder es können alternativ verschiedenartige Koppelgetriebe verwendet werden, bei denen eine Auflösung der Erfassung des Stellwegs in ausgewählten Bereichen vergrößert oder verkleinert ist. Mit solch einer vorteilhaften Ausgestaltung der Erfindung müssen die Schaltauslöser des Betätigungselements nicht weiter hinsichtlich der Anordnung gegenüber der Schalter variiert werden. Es können mit der Form oder der Anordnung des Betätigungselements selbst unterschiedliche Bereiche der Genauigkeit einer Erfassung des Stellwegs des Antriebs erreicht werden.

Gemäß der Erfindung sind die Schalter der Schaltereinheit einfache Schalter mit Schaltfunktion in Form von Wechselschaltern oder Mehrfachschaltern. Die erfindungsgemäßen Schalter der Schaltereinheit sind also konstruktiv einfach ausgebildete Schalter und dadurch sehr robust und unanfällig gegenüber jedweder Störung. Jeder der Schalter kann beispielsweise als einfacher Wechselschalter mit einer einzigen An/Aus-Schaltstellung realisiert sein. Es ergeben sich unterschiedliche Möglichkeiten derartiger Schalter, beispielsweise ein Kippschalter, ein Druckschalter oder andere Formen von Schaltern, welche mechanisch auf direkte Weise oder auch indirekt mittels berührungsloser Schaltauslöser entsprechend der Verstellung des Antriebs betätigt werden können. Auch können erfindungsgemäß einfache Schalter mit einer Mehrfachschaltfunktion mit mehreren Schaltpunkten in einem Schalter verwendet werden. Auf diese Weise kann die Vorrichtung noch kompakter in der Bauform realisiert werden, da mehr Schaltstellungen und Kombinationen von Schaltstellungen für die kodierte Ermittlung von Stellungen des Antriebs im Vergleich zu einem Wechselschalter mit lediglich einfacher An/Aus-Funktion gegeben sind.

Nach der Erfindung sind die Schalter mit Schaltflächen oder Schaltelementen zur Verstellung mittels Schaltauslösern in direktem Kontakt versehen. Die Schaltauslöser können als Schalthebel, Nocken einer Nockenwalze oder Nockenbahn (Nockenstange) oder andere in der Form realisierte Komponenten gebildet werden, welche mit den Schaltflächen oder Schaltelementen der Schalter, die in entsprechender Form und Lage entsprechend gegenüberliegend positioniert sind, für das Betätigen der Schalteinheit zusammenwirken. Eine störungsfreie und funktionssichere Lageermittlung auch unter extremen äußeren Bedingungen ist dadurch möglich.

Gemäß eines Beispiels das nicht Teil der Erfindung ist, sind die Schalter kontaktlos betätigbare bzw. berührungsfreie Schalter. Die Schalter können beispielsweise als sogenannte Reed-Kontakte, Hall-Sensoren, induktive Schalter oder kapazitive Schalter vorgesehen werden. Die berührungslose Betätigung hat in bestimmten Anwendungsfällen den Vorteil, dass kein direkter Kontakt zwischen den Schaltauslösern des Betätigungselements und den Schaltern selbst erforderlich ist. Die Schaltauslöser und das Betätigungselement können somit auch in einem gewissen Abstand von der eigentlichen Schalteinheit angeordnet werden. Dies hat verschiedene weitere Vorteile, da auch eine mechanische Störung aufgrund von Verschmutzungen oder dergleichen hierdurch vermieden wird.

Gemäß der Erfindung ist das Betätigungselement mechanisch mit dem beweglichen Teil im Hinblick auf die Stellbewegung des Antriebs direkt gekoppelt. Die direkte mechanische Kopplung zwischen dem Betätigungselement und dem beweglichen Teil des Antriebs, wie zum Beispiel einer Antriebswelle oder einer Antriebsstange eines hydraulischen Antriebs für eine Armatur, kann zum Beispiel über eine entsprechende Zahnradverbindung, ein Getriebe, eine Keilwelle oder ähnliche dem Fachmann des Gebiets bekannte mechanische Kopplungsmittel erfolgen. Die Vorrichtung kann dadurch sehr genau den entsprechenden Stellweg und die Position des Antriebs erfassen. Die Vorrichtung kann beispielsweise auf einem festgelegten Stellweg zwischen einer Anfangsstellung und einer Endstellung an den jeweils vorgesehenen Zwischenpositionen der Schalter über das Betätigungselement mit den Schaltauslösern die entsprechenden Positionen im Wege der Erfassung der Kodierung in der Steuereinheit ermitteln. Die Vorrichtung kann jedoch auch alternativ verwendet werden, um einen nichtbegrenzten Stellweg eines beispielsweise drehenden Antriebs einer Drehwelle für eine hydraulische Vorrichtung festzustellen. Mit der erfindungsgemäßen direkten mechanischen Kopplung zwischen dem Betätigungselement und dem sich bewegenden Teil des Antriebs lässt sich eine sehr genaue Erfassung der jeweiligen Position mit einfachen Mitteln ohne die Notwendigkeit von vollständig kontinuierlich messenden elektrischen Einrichtungen wie Potentiometern oder dergleichen erreichen.

Gemäß einer weiteren vorteilhaften Ausgestaltung der Erfindung ist das Betätigungselement in Form einer Nockenwelle oder Nockenwalze mit einer Anzahl von unterschiedlichen Nocken als Schaltauslöser für die verschiedenen Schalter, mit welchem die Nocken in Kontakt stehen, ausgebildet. Erfindungsgemäß wird so eine Betätigung der Schalter über eine spezifische Form von Nocken auf einer Nockenwelle hervorgerufen. Die Nockenwelle oder Nockenwalze ist dadurch auf sehr kompakte Weise mit verschiedenen Formen und einer verschiedenen Anzahl von Nocken beispielsweise ausgebildet. Es kann beispielsweise für einen ersten Schalter und einen zweiten Schalter jeweils ein einziger Nocken auf einer Nockenwalze mit einer entweder AN- oder AUS-Stellung des Schalters über eine vollständige Umdrehung der Nockenwalze vorgesehen sein, während für die weiteren dritten, vierten oder fünften Schalter jeweils zwei, drei oder sogar acht Nocken auf einer einzigen Nockenform im Umfang mit entsprechend mehreren Umschaltungen gebildet sind. Solch eine Nockenwalze kann erfindungsgemäß auf sehr kompakte Weise eine Vielzahl von möglichen Stellungskombinationen der Schalter hervorrufen. Die Anzahl von Positionen zur Stellungserfassung ist dadurch relativ groß. Das Betätigungselement ist dadurch sehr kompakt und weist sehr einfach ausgebildete Schaltauslöser in Form der unterschiedlich geformten und angeordneten Anzahl von Nocken auf der Nockenwelle auf mit einer dennoch recht genauen quasi-kontinuierlichen Erfassung der Bewegung.

Gemäß einer weiteren vorteilhaften Ausgestaltung der Erfindung ist die Schaltereinheit mit der Mehrzahl an Schaltern ein einheitlicher Block mit der in dem Block zusammengefassten Mehrzahl von übereinander oder nebeneinander angeordneten Schaltern, welche in festgelegten Positionen jeweils angebracht ist/sind. Auf diese Weise werden sogenannte kombinierte Schaltertürme oder Schaltereinheiten mit jeweils direkt aneinander oder nebeneinander angeordneten Einzelschaltern realisiert. Die Lage und Position der Schalter ist somit sicher festgelegt. Die Schaltereinheiten können auch leicht montiert und bei einem Defekt ausgetauscht werden. Es ist ebenfalls möglich, mehrere solcher zusammengefassten Schaltereinheiten als Blockelemente an ein und demselben beweglichen Teil des Antriebs anzuordnen, so dass eine Art Redundanz in der Erfassung der Stellung des Antriebs ermöglicht wird. Die Ausfallsicherheit der Stellungserfassung wird dadurch noch weiter verbessert. Die Zusammenfassung der Einzelschalter in jeweiligen Schaltereinheiten hat ferner den Vorteil, dass die Montage und die Demontage erleichtert sind sowie eine sehr kompakte Bauform der Sensoreinrichtung ermöglicht wird.

Gemäß einer weiteren vorteilhaften Ausgestaltung der Erfindung ist die Kodierung der verschiedenen Schaltstellungen und Kombination von Schaltstellungen der Schalter in dem Steuermodul der Vorrichtung zu den Drehstellungen oder Linearstellungen des beweglichen Teils des Antriebs in Form einer Gray-Kodierung hinterlegt. Mit solch einer Gray-Kodierung kann in einer relativ einfach ausgebildeten Steuerung eine Zuordnung der Kombination von Schaltstellungen der Schalter zu den jeweiligen relativen Lagen des Antriebs hinterlegt werden. Die Gray-Kodierung ermöglicht es, eine Vielzahl von einfachen binären Schaltstellungen der einzelnen Schalter auf ansprechende Kodierungen der tatsächlichen Stellung des Antriebs umzusetzen. Die Gray-Kodierung kann auch leicht in einem Speicherelement einer Steuereinheit der erfindungsgemäßen Vorrichtung abgespeichert werden für die jeweiligen konstruktiven Ausgestaltungen des Antriebs und der entsprechenden Schalter der Schalteinheit. Andere Arten einer Kodierung können ebenso im Rahmen der vorliegenden Erfindung verwendet werden, um eine eindeutige Zuordnung der jeweiligen Stellbewegung des Antriebs zu den verschiedenen Schaltstellungen oder einer Kombination von Schaltstellungen der Schalter der Schaltereinheit zu erreichen.

Gemäß einer weiteren vorteilhaften Ausgestaltung der Erfindung gibt die Kodierung in dem Steuermodul der Schaltstellungen der Schalter eine quasi-kontinuierliche Abbildung verschiedener diskreter Stellungspunkte eines vordefinierten Stellwegs des Antriebs wieder. Die Vorrichtung erlaubt somit eine quasi-kontinuierliche Erfassung der jeweiligen Lage über einen definierten Stellweg hinweg. Die Kodierung ist dabei so vorgesehen und abgespeichert, dass entsprechende einzelne Stellungspunkte an vorbestimmten Positionen den Stellweg möglichst gut und hinreichend genau für die jeweilige Anwendung abbilden. Damit lässt sich ein hinreichend zuverlässiger und genauer Ersatz für eine vollständig kontinuierliche Stellungserfassung mit der erfindungsgemäßen Lösung bereitstellen. Die Erfindung ist nicht auf einfache Anwendungsbereiche derartiger hydraulischer Antriebe beschränkt und lässt sich auch bei relativ extremen Umgebungsbedingungen wie sehr hohen Temperaturen, sehr niedrigen Temperaturen, einer Explosionsgefahr und dergleichen sowie einer Kombination dieser vorteilhaft einsetzen. Ein vordefinierter Stellweg gemäß der Erfindung kann beispielsweise eine Verstellung zwischen einer Anfangsstellung und einer Endstellung des Antriebs bzw. der Armatur sein. Bei einer Klappenarmatur wäre dies zum Beispiel die Öffnungs- und die Schließstellung der Klappe.

Gemäß einer weiteren vorteilhaften Ausgestaltung der Erfindung bildet die Kodierung in dem Steuermodul der Vorrichtung hinsichtlich der Schalterstellungen der Schalter in regelmäßigen Abständen über einen vordefinierten Stellweg des Antriebs hinweg verteilte Stellungspunkte ab. Die über den Stellweg regelmäßig hinweg verteilten Stellungspunkte sind also relativ gleichmäßig in den Abständen zueinander vorgesehen. So kann eine vollständige genaue Abbildung der Stellposition in regelmäßigen Abständen über den Stellweg hinweg durch die Erfindung zur Erfassung der tatsächlichen Lage des hydraulischen Antriebs erfolgen.

Gemäß einer weiteren vorteilhaften Ausgestaltung der Erfindung gibt die Kodierung der Schaltstellungen der Schalter in dem Steuermodul sich über den Stellweg des Antriebs hinweg variierende Positionen des beweglichen Teils des Antriebs wieder. Mit solch einer variierenden Anordnung und Abbildung der Stellungspunkte des Antriebs lassen sich gezielte vorteilhafte Ausgestaltungen von Steuerungen und Regelungen des Antriebs realisieren. Bei bestimmten Anwendungen ist beispielsweise die Position nahe an einem Endpunkt mehr relevant als über den Anfangsbereich eines Stellwegs. An diesem Bereich wird also eine dichtere Anordnung von Erfassungspunkten der Schalter vorgesehen. So kann mit der erfindungsgemäßen Vorrichtung eine auf den jeweiligen Anwendungszweck hin besser angepasste Genauigkeit erzielt werden.

Eine sich über den Stellweg hinweg variierende Erfassungsgenauigkeit der Vorrichtung gemäß der Erfindung kann beispielsweise dadurch erreicht werden, dass das Betätigungselement exzentrisch in der Drehachse bei einer Drehverstellung angeordnet ist. Auch kann das Betätigungselement mit verschiedenartigen Schaltauslösern gebildet sein, die unterschiedlich starke Auslösemomente der Erfassung des Stellwegs an unterschiedlichen Positionen des Stellwegs erlauben. Alternativ kann auch eine ungleiche Aufteilung von Schaltauslösern des Betätigungselements vorhanden sein, mit welcher solche weiteren Vorteile hinsichtlich einer sich über den Stellweg hinweg variierenden Erfassungsgenauigkeit von Stellungspositionen des hydraulischen Antriebs ermöglicht werden.

Gemäß einer weiteren vorteilhaften Ausgestaltung der Erfindung ist in dem Steuermodul der Vorrichtung ein Auswertungsschaltkreis hinterlegt, welcher eine Extrapolation von Stellungen des beweglichen Teils im Verhältnis zu dem feststehenden Teil auf der Basis von bis dahin schon erfassten Schaltstellungen der Schalter ermöglicht. Mit solch einem Extrapolationsmodul lässt sich in dem Steuermodul eine genaue Vorhersage auch von zukünftigen Stellungen des hydraulischen Antriebs erzielen, ohne dass die Stellungen bereits erreicht werden. Mit solch einem Modul lässt sich eine Art vorausschauende Steuerung und Regelung der Antriebe realisieren, um Fehlschaltungen oder gar Beschädigungen in dem Antrieb sicher zu vermeiden.

Gemäß einer weiteren vorteilhaften Ausgestaltung der Erfindung sind zwei oder mehr Schaltereinheiten mit einer Mehrzahl von jeweiligen Schaltern an einem beweglichen Teil oder an einem mit dem beweglichen Teil direkt mechanisch gekoppelten Element der Vorrichtung angeordnet. Die Vorrichtung nach dieser Ausführungsform hat somit mehrere Schaltereinheiten für eine noch weiter verbesserte Erfassung der jeweiligen Stellung des hydraulischen Antriebs. Mit einer zusätzlichen Schaltereinheit wird auch eine Art Redundanz oder Doppelwirkung erzielt, so dass bei einem Ausfall eines Schalters oder einer Schaltereinheit die Erfassung weiterhin sicher gewährleistet ist. Mit solch einer mehrfachen Schaltereinheit können auch andere Vorteile in technischer Hinsicht erzielt werden, nämlich beispielsweise eine Art Abgleich zwischen verschiedenen Schalterpositionen, um etwaige Ungenauigkeiten direkt auszugleichen bzw. bei unterschiedlicher Anordnung die Anzahl der Erfassungspunkte zu erhöhen.

Gemäß einer weiteren vorteilhaften Ausgestaltung der Erfindung weist das Betätigungselement Schaltauslöser für die jeweiligen Schalter auf Basis einer nichtmechanischen Auslösungstechnik auf, insbesondere einer fluidtechnischen, elektrischen oder magnetischen Betätigung. Solche mechanisch nicht direkt erfolgenden indirekten Betätigungen der Schalter über das Betätigungselement haben in speziellen Anwendungsumgebungen weitere Vorteile: Beispielsweise im Bereich von Umgebungen mit größeren Stößen, Schwingungen, Feuergefahr, hoher Wärme oder elektromagnetischer Strahlung können so spezielle Anwendungen der Stellungserfassung der hydraulischen Antriebe erzielt werden, die hinreichend sicher sind und dennoch relativ einfach in der Konstruktion ohne Erfordernis von wirklich kontinuierlichen Potentiometern oder dergleichen realisierbar sind. Eine indirekte, nichtmechanische Auslösungstechnik kann auch in bestimmten Bereichen erforderlich sein, bei welchen die Einzelteile der Schalter und der Schaltauslöser nicht immer störungsfrei miteinander leicht in Kontakt gelangen können. Auch in solchen Umgebungen lässt sich so eine vorteilhafte erfindungsgemäße quasi-kontinuierliche Stellungserfassung realisieren.

Gemäß einer weiteren vorteilhaften Ausgestaltung der Erfindung umfassen die Schaltauslöser des Betätigungselements oder die Schalter selbst ein Mittel zur Reibungsreduzierung. Dieses Reibungsreduzierungsmittel kann insbesondere eine Rolle, ein Gleitelement oder auch eine Beschichtung an einer Kontaktfläche eines dieser Elemente umfassen. Die Reduzierung der Reibung hat den Vorteil, dass ein langfristiger störungsfreier Betrieb der Stellungserfassung möglich ist, ohne dass eine Wartung erforderlich wird. Die Reibungsreduzierung hat ferner den Vorteil, dass eine leichtgehende Auslösung der Schalter ermöglicht wird. Die Schalter sind so sicher in den jeweiligen vordefinierten Stellungspositionen, was insbesondere im Falle von Mehrfachschaltern ein Vorteil ist.

Gemäß einer weiteren vorteilhaften Ausgestaltung der Erfindung ist eine mechanische Kopplung in Form eines Getriebes oder in Form von Zahnrädern oder Zahnelementen zwischen einem Antriebselement des beweglichen Teils und dem am feststehenden Teil vorhandenen Betätigungselement vorgesehen. Eine solche direkte mechanische Kopplung ist sicher in der Übertragung der jeweiligen Stellungen zwischen dem Antriebsteil des hydraulischen Antriebs und dem Übertragungselement für die Erfassung der Stellung mit der erfindungsgemäßen Vorrichtung. Das Betätigungselement ist dadurch direkt mit dem hydraulischen Antrieb und seinem sich bewegenden Teil gekoppelt, so dass eine sichere direkte Übertragung der Informationen hinsichtlich der jeweiligen aktuellen Stellung gewährleistet ist. Eine alternative indirekte mechanische Kopplung über Getriebe, Zahnelemente oder dergleichen ist ebenfalls möglich.

Erfindungsgemäß wird nach Anspruch 13 auch ein hydraulischer oder elektrohydraulischer Antrieb für die Betätigung von Armaturen, insbesondere von Klappen, Kugelhähnen oder Ventilen, über einen vordefinierten Stellweg zwischen insbesondere einer Öffnungsstellung und einer Schließstellung mit einer relativen Bewegung eines beweglichen Teils des Antriebs im Verhältnis zu einem feststehenden Teil des Antriebs vorgeschlagen, wobei der Antrieb dadurch gekennzeichnet ist, dass er eine Vorrichtung zur Stellungserfassung einer Drehstellung oder einer Linearstellung für den beweglichen Teil des Antriebs nach einem der Ansprüche 1 bis 16 umfasst. Gemäß einer diesbezüglichen Ausführungsform der Erfindung ist der Antrieb ein hydraulischer Antrieb für eine Drehbewegung von rotierenden Armaturen wie Klappen, Kugelhähnen oder Ventilen, wobei das bewegliche Teil des Antriebs eine rotierende Antriebswelle ist und wobei die Vorrichtung zur Erfassung der Stellung zwischen der Antriebswelle und einem feststehenden Teil des Antriebs montiert ist.

Weitere Merkmale, Aspekte und Vorteile der Erfindung werden im Folgenden mehr im Detail anhand von verschiedenen Ausführungsbeispielen der Erfindung im Zusammenhang mit den beigefügten Zeichnungen und den dort enthaltenen Figuren beschrieben werden. In den Zeichnungen zeigen:
- Fig. 1: eine Draufsicht eines Ausführungsbeispiels einer erfindungsgemäßen Vorrichtung zur Stellungserfassung;
- Fig. 2: eine perspektivische Ansicht des Ausführungsbeispiels einer erfindungsgemäßen Vorrichtung zur Stellungserfassung gemäß der Fig. 1;
- Fig. 3: eine Schnittansicht eines weiteren Ausführungsbeispiels einer erfindungsgemäßen Vorrichtung zur Stellungserfassung einer Drehstellung eines hydraulischen Antriebs;
- Fig. 3a: eine perspektivische Ansicht eines Details des Betätigungselements der Stellungserfassungsvorrichtung gemäß der Fig. 3;
- Fig. 3b bis Fig. 3e: verschiedene Schnittansichten der Nockenwalze als Beispiel eines Betätigungselements einer erfindungsgemäßen Stellungserfassungsvorrichtung gemäß dem Ausführungsbeispiel der Fig. 3; und
- Fig. 4: eine Tabelle eines weiteren Ausführungsbeispiels einer erfindungsgemäßen Stellungserfassungsvorrichtung zur Veranschaulichung einer in einem Steuermodul hinterlegten Kodierung der Schalterstellungskombination und der Lage des Antriebs in Form einer Gray-Kodierung.

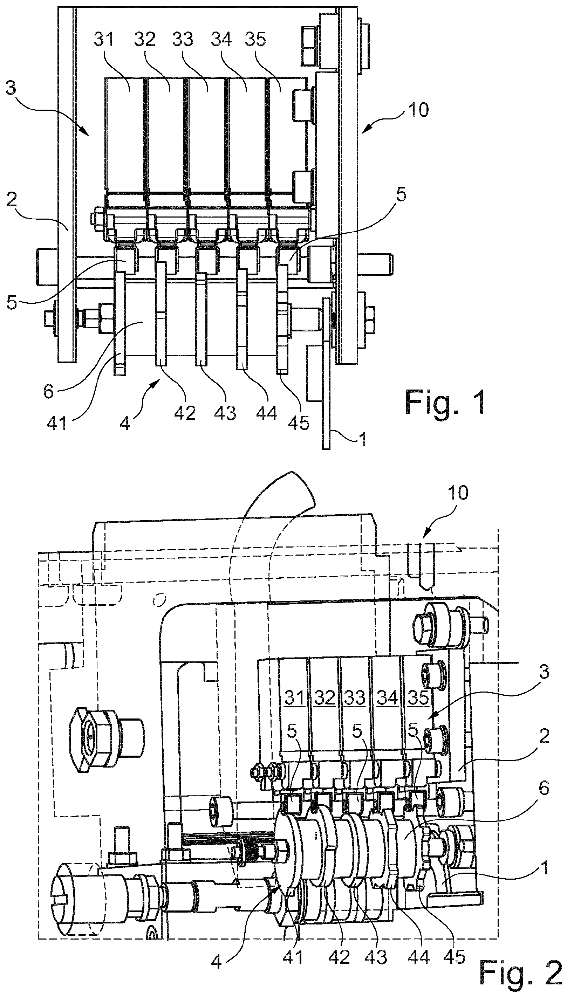

In Fig. 1 und Fig. 2 der Zeichnungen ist ein erstes Ausführungsbeispiel einer erfindungsgemäßen Vorrichtung 10 zur Stellungserfassung einer Drehstellung eines hydraulischen Antriebs wiedergegeben. Die Vorrichtung 10 umfasst bei diesem Ausführungsbeispiel eine Schaltereinheit 3 mit fünf Schaltern 31, 32, 33, 34, 35, welche in Form eines sogenannten Schalterturms oder einer Schaltereinheit zusammengefasst sind. Die Schaltereinheit 3 ist an einem feststehenden Teil 2, beispielsweise einem Gehäuseteil oder einem Flanschteil des hydraulischen Antriebs, montiert. Die Schaltereinheit 3 ist mit einem Betätigungselement 4 zum Betätigen der Schalter 31 bis 35 gekoppelt, wobei das Betätigungselement 4 mit dem beweglichen Teil 1 des hydraulischen oder elektrohydraulischen Antriebs direkt oder indirekt mechanisch gekoppelt ist. Die Drehbewegung eines Stellglieds, wie zum Beispiel einer Antriebswelle des hydraulischen Antriebs, wird dadurch auf das Betätigungselement 4 mechanisch übertragen, beispielsweise in Form einer Zahnradkombination, eines Zahnkranzes, einer Keilwelle oder ähnlichem. Bei einem Verstellen des hydraulischen Antriebs wird das Betätigungselement 4 entsprechend der Stellbewegung des Antriebs mit betätigt.

Die Drehbewegung des beweglichen Teils 1 (Drehwelle Antrieb) wird bei diesem Ausführungsbeispiel direkt auf eine Art Nockenwelle 6 bzw. Nockenwalze übertragen durch eine Kopplung mit dem beweglichen Teil 1 des Antriebs über ein großes Zahnrad, welches mit einem kleineren Zahnrad an der Nockenwelle 6 in Eingriff steht. Die Nockenwelle 6 weist entsprechend der Anzahl der Schalter 31 bis 35 bei diesem Ausführungsbeispiel fünf Schaltauslöser 41, 42, 43, 44, 45 auf, die in Form von unterschiedlich geformten Nocken an der Nockenwelle 6 an entsprechenden Positionen der Schalter 31-35 vorhanden sind. Die Schaltauslöser 41-45 sind bei diesem Beispiel direkt gegenüberliegend von den Schaltern 31-35 der Schalteinheit 3 montiert und mit dieser mechanisch direkt über ein reibungsreduzierendes Mittel 5, beispielsweise eine Rolle, zum Schalten der Schalter 31-35 verbunden. Bei einem Drehen des Betätigungselements 4 in Form dieser Nockenwelle 6 werden die Schalter 31-35 jeweils unterschiedlich an- oder ausgeschaltet, wobei in jeder Lage oder Stellung des hydraulischen Antriebs eine eindeutige Kombination von Schaltstellungen der Schalter 31-35 gegeben ist. Die Schalter 31-35 der Schalteinheit sind bei diesem Ausführungsbeispiel einfache Wechselschalter, also binäre Schalter, so dass sie entweder eine Stellung auf AN oder auf AUS haben.

Bei diesem Ausführungsbeispiel der Erfindung weist das Betätigungselement 4 in Form einer Nockenwelle 6 unterschiedlich geformte Nocken als Schaltauslöser 41-45 auf.

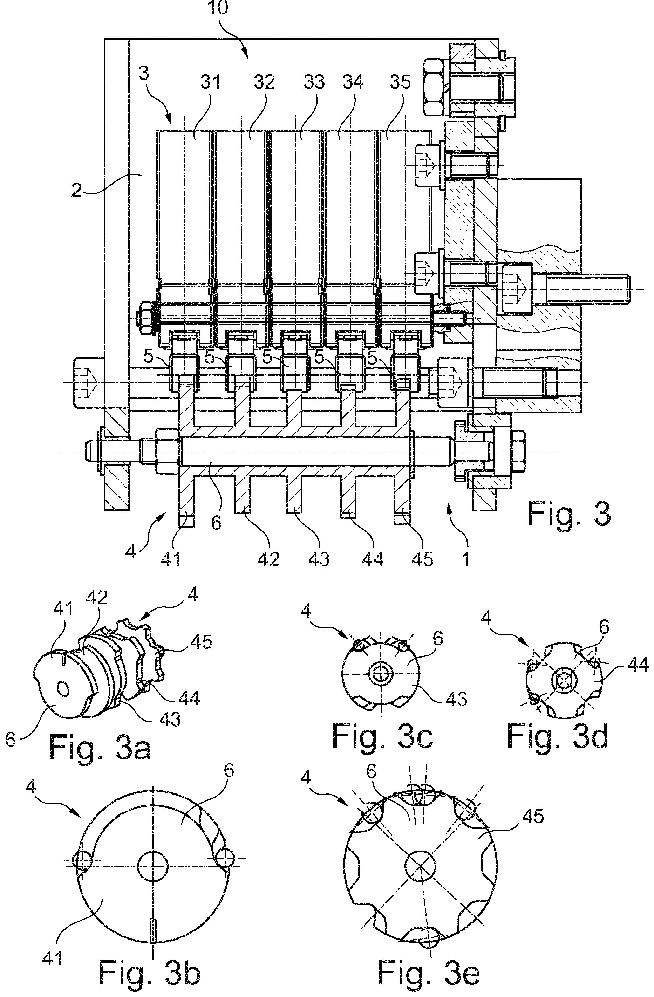

Während die ersten beiden Schaltauslöser 41, 42 jeweils einen einzigen Nocken über den Kreisumfang des Betätigungselements 4 hinweg zum Betätigen der ersten beiden Schalter 31, 32 aufweisen, ist der dritte Schaltauslöser 43 ein doppelter Nocken, der vierte Schaltauslöser 44 ein Vierfachnocken, und der fünfte Schalterauslöser 45 weist über den Umfang hinweg acht Nockenvorsprünge auf. Dies ergibt sich auch aus der weiteren Darstellung der Fig. 3 und Fig. 3a bis 3e, aus welcher diese unterschiedlich geformten Schaltauslöser 41-45 bei diesem Ausführungsbeispiel eines Betätigungselements 4 für die Schaltereinheit 3 gut zu erkennen sind. Die Schalter 31-35 der Schalteinheit 3 sind bei diesem Ausführungsbeispiel einfache Wechselschalter, welche durch die unterschiedlich geformten Schaltauslöser 41-45 in jeder Drehstellung des drehenden Teils 1 des hydraulischen Antriebs eine festgelegte eindeutige Schaltkombination haben. Es könnten jedoch auch Mehrfachschalter mit mehr als zwei Schaltstellungen verwendet werden. Die Schalter sind so an der Schalteinheit 3 kombiniert und angebracht, dass sie im Zusammenwirken mit den Schaltauslösern 41-45 des Betätigungselements 4 jeweils eindeutige Schaltkombinationen in entsprechenden Drehstellungen des beweglichen Teils 1 des Antriebs aufweisen. Mit jeder Drehstellung werden die Schalter 31-35 entweder an- oder ausgeschaltet, da es sich bei diesem Ausführungsbeispiel um einfache Wechselschalter handelt. Zur Reibungsreduzierung ist an den Schaltern an dem mit dem Betätigungselement 4 in Kontakt gelangenden Ende jeweils eine Rolle 5 als Mittel zur Reibungsreduzierung vorgesehen. Die Schalter erlauben aufgrund dieser Art der Betätigung mit dem Betätigungselement 4 eine eindeutige Feststellung der jeweiligen Drehstellung des hydraulischen Antriebs oder elektrohydraulischen Antriebs entsprechend einer Kodierung, wie sie in einem Steuermodul (nicht gezeigt) hinterlegt ist, wie im Folgenden erläutert.

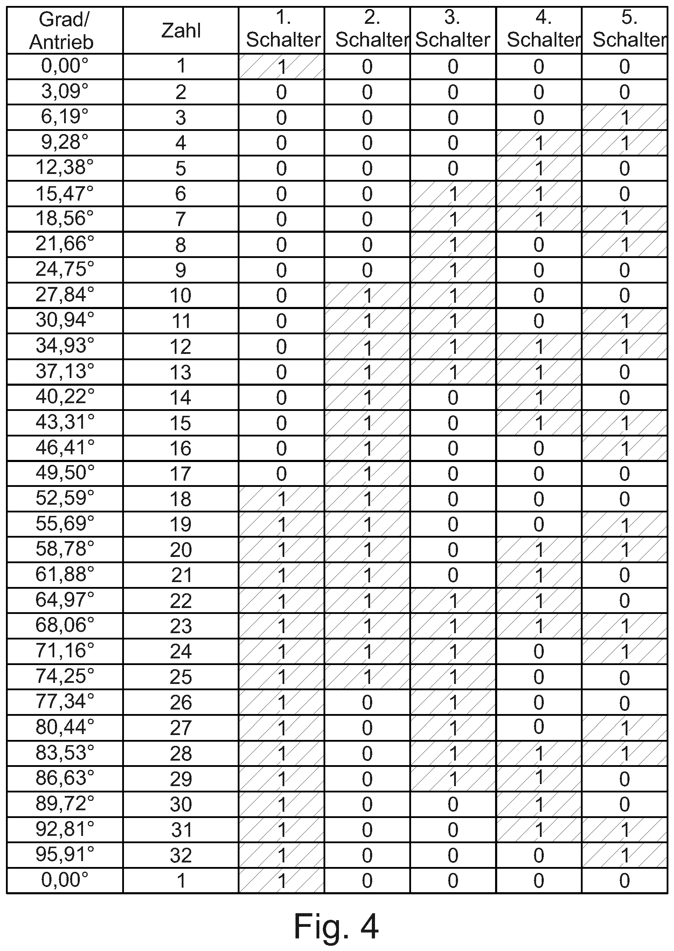

In der Fig. 4 ist ein Beispiel einer Gray-Kodierung für das in Fig. 1 bis Fig. 3 gezeigte Ausführungsbeispiel in Form einer Tabelle wiedergegeben, welche in einem Steuermodul der Vorrichtung 10 gespeichert ist. Aufgrund der Zuordnung und Anordnung des Betätigungselements 4 in Form der Nockenwelle 6 bzw. Nockenwalze mit unterschiedlichen Nockenformen zu den fünf Schaltern 31-35 werden die Schalter 31-35 bei jeder Drehstellung von 3,09° jeweils eindeutig unterschiedlich in der Kombination betätigt. Es ergibt sich aufgrund der fünf binären Schalter eine Anzahl von insgesamt 2⁵ (also 32) möglichen Signalmeldungen des Steuermoduls der Vorrichtung 10, welche die entsprechende Drehstellung des beweglichen Teils 1 des hydraulischen Antriebs quasi-kontinuierlich über den Stellweg hinweg wiedergeben. Dies ist in der Gray-Kodierung der Tabelle nach dem Beispiel der Fig. 4 wiedergegeben.

Die erfindungsgemäße Vorrichtung 10 erlaubt somit eine quasi-kontinuierliche und ausfallsichere Stellungserfassung eines drehenden Teils eines hydraulischen Antriebs oder elektrohydraulischen Antriebs, beispielsweise eines hydraulischen Antriebs für die Betätigung einer Klappe eines Kugelhahns oder ähnlichem. Solche Armaturen können auch bei extremen Bedingungen eingesetzt werden, beispielsweise auf Schiffen oder Bohrinseln, welche auch bei sehr tiefen Temperaturen beispielsweise in der Polarregion bei bis zu -55° C einen funktionssicheren Betrieb ermöglichen müssen. Konventionelle herkömmliche elektrische Potentiometer zur Erfassung der Drehstellung von drehenden Antriebsteilen derartiger hydraulischer Antriebe sind dann nicht mehr einsatzfähig. Sie könnten ausfallen oder falsche Sensorwerte liefern. Um diesem Nachteil zu begegnen, wird erfindungsgemäß die Drehstellung quasi-kontinuierlich über eine Kombination von Schaltstellungen der Schalter 31-35 der Schalteinheit 3 ermittelt. Hierzu sind erfindungsgemäß spezielle Betätigungselemente 4 vorhanden, die eine unterschiedliche, aber eindeutige Kombination von Schaltstellungen je Drehstellung bzw. Linearstellung der beweglichen Teile 1 des Antriebs wiedergeben. Die Schalter 31-35 sind bei den gezeigten Ausführungsbeispielen einfache Wechselschalter. Es handelt sich um einen zusammengefassten Block oder Schalterturm in Form einer Schaltereinheit 3. Die Anzahl der Schalter kann auch mehr als fünf betragen. Die Schalter 31-35 können auch anstatt einfacher Wechselschalter mit nur einer Ein/Aus-Stellung Schalter mit mehreren Schaltpositionen sein, beispielsweise Dreifachschalter oder Doppelwechselschalter. Mit solch einer erfindungsgemäßen Lösung wird eine noch größere Anzahl von Erfassungspunkten über die Kodierung im Steuermodul realisierbar. Die Rollen 5 an den Enden der Schalter 31-35 bei den gezeigten Ausführungsbeispielen dienen der Reduzierung der Reibung und der sicheren Funktionsweise bei der Betätigung mit den Schaltauslösern 41-45 in Form der unterschiedlichen Nocken der Nockenwalze 6 des Betätigungselements 4. Die Rollen 5 können jedoch auch weggelassen werden.

Anstatt von direkt mechanisch gekoppelten Schaltern 31-35 können erfindungsgemäß auch berührungslose Schalter vorgesehen werden, beispielsweise Reed-Kontakte, Hall-Sensoren, induktive Schalter oder kapazitive Schalter. Dafür werden entsprechend anders gebildete Schaltauslöser 41-45 vorgesehen, die jedoch ebenfalls erfindungsgemäß mit dem beweglichen Teil 1 des Antriebs, beispielsweise einer Drehwelle oder einer Linearstange zur Verstellung der Armatur, direkt oder indirekt gekoppelt sind. Auch bei solch einer Form der nicht direkt mechanischen Kopplung mit berührungslosen Schaltern wird aufgrund einer speziellen Kodierung die Zuordnung der verschiedenen Stellungen des beweglichen Teils 1 mit der Mehrzahl an Schaltern 31-35 der Schaltereinheit 3 in einem Steuermodul festgestellt und in unterschiedlichen extremen Umgebungsbedingungen sicher ermittelt.

Die erfindungsgemäße Vorrichtung 10 zur Stellungserfassung hat den Vorteil, dass sie ohne Betriebsstörungen bei auch extremen Situationen wie sehr niedrigen oder sehr hohen Temperaturen, bei Stößen, Schwingungen, Feuer, elektromagnetischer Strahlung oder dergleichen sicher funktioniert und eine ausfallsichere Regelung und Steuerung derartiger hydraulischer oder elektrohydraulischer Antriebe aufgrund einer quasi-kontinuierlichen Erfassung der Lage über einen Stellweg hinweg gewährleistet. Gemäß einer diesbezüglichen vorteilhaften Variante sind zumindest die elektrischen oder elektronischen Bauteile der Vorrichtung 10 gegenüber den Umgebungsbedingungen wie Feuer, Stößen, elektromagnetischer Strahlung etc. speziell geschützt. Die elektronischen Bauteile und insbesondere auch das Steuermodul zur Speicherung der Kodierung zwischen den Schaltstellungen der Schalter 31-35 der Schalteinheit 3 und den Positionen des Stellwegs des beweglichen Teils 1 des Antriebs können über entsprechend geschützte Gehäuseteile, Abschirmungen oder eine entfernte Anordnung von dem eigentlichen hydraulischen Antrieb erreicht werden. Auf diese Weise wird verhindert, dass es Beeinträchtigungen in dem Betrieb der Vorrichtung zur Erfassung der Stellung bei solchen extremen Umgebungsbedingungen gibt, welche durch einen Ausfall einzelner elektronischer oder elektrischer Bauteile hervorgerufen werden können. Insbesondere sind erfindungsgemäß das Steuermodul mit der Auswertung sowie die Schalter 31-35 der Schalteinheit 3 von derartigen extremen äußeren Umgebungsbedingungen dementsprechend besonders geschützt.

Bei den in den Zeichnungen dargestellten Ausführungsbeispielen wird die erfindungsgemäße Vorrichtung 10 zur Stellungserfassung für die Erfassung einer Drehstellung einer Antriebswelle eines hydraulischen Antriebs beispielsweise einer Klappenverstellungsarmatur gezeigt. Die erfindungsgemäße Vorrichtung 10 kann jedoch auch zur Erfassung einer Linearstellung von einem geradlinig beweglichen Teil eines derartigen Antriebs eingesetzt werden. Die Betätigungselemente 4 sind dann vorzugsweise quasi abgewickelte Nockenwalzen oder Nockenwellen oder entsprechende Nockenstangen, die mit den entsprechenden Schaltern aufgrund der Anordnung und Zuordnung zu den Schaltauslösern 41-45 des Betätigungselements zusammenwirken. Oder alternativ werden andere Schaltauslöser verwendet. Auch bei solch einer Ausführungsform wird über eine in einem Steuermodul hinterlegte Kodierung die eindeutige Zuordnung der Stellung zu der Kombination von Schalterstellungen der Schalter 31-35 der Schaltereinheit 3 gewährleistet, um eindeutige Positionserfassungen des Antriebs entsprechend der tatsächlichen aktuellen Position und Lage des Antriebsteils zu ermitteln.

Anstatt einer wie in Fig. 4 gezeigten Gray-Kodierung können andere Formen einer Kodierung und Zuordnung in einem Steuermodul zwischen den Schalterstellungen der Schalter 31-35 der Schalteinheit 3 und der tatsächlichen Lage des beweglichen Teils 1 des Antriebs verwendet werden. Die Zuordnung und Kodierung muss nur bei diesem Ausführungsbeispiel so eindeutig gewährleistet sein, dass jede Stellung des beweglichen Teils 1 des Antriebs eine eindeutige Kombination von Schalterstellungen der Schalter 31-35 widerspiegelt.

Eine solche Kodierung gemäß diesem Ausführungsbeispiel der Erfindung mittels einer Gray-Kodierung hat den Vorteil, dass in jedem Schaltpunkt stets nur ein Schalter seine Schaltstellung variiert. Lageabweichungen der Schalter oder der Elemente des Schalters durch beispielsweise Toleranzen in der Fertigung und in der Montage, Lagerspiele, thermische Dehnung etc. sind so tolerabel und ohne Einfluss auf das Messergebnis. Andere Kodierungssysteme, in denen an dem Schaltpunkt mindestens zwei Schalter ihren Zustand ändern, sind demgegenüber vergleichsweise anfällig. Es ist jedoch erfindungsgemäß auch möglich, andere Formen von Kodierungen zu verwenden. Eine vorab fest eingestellte Zuordnung zwischen dem Stellweg des beweglichen Teils des hydraulischen Antriebs und der Schaltstellungen der Schalter der Schalteinheit 3 ist erfindungsgemäß nicht unbedingt erforderlich. Es ist auch möglich, in einer Auswertelektronik des Steuermoduls eine Art Lernpfad oder einen Lernmodus vorzusehen. Dabei wird beispielsweise von einer ersten Endlage A bis zu einer zweiten Endlage B der hydraulische Antrieb mit dem beweglichen Teil 1 verstellt, und die jeweilige Zuordnung der Positionen der Schaltauslöser der Schalteinheit bzw. des Betätigungselements 3 zu den Kodierungen wird dann entsprechend angepasst und neu gespeichert. Dadurch kann eine rein mechanische und relativ aufwendige Einstellung und Justage des Messsystems vermieden werden. Auch ist mit solch einer Einlernmöglichkeit des Steuermoduls eine Variante der Erfindung realisierbar, wonach eine Extrapolation auf noch nicht erfasste Stellungspositionen leichter ermöglicht wird.

Die Betätigung durch die Schaltauslöser 41-45 des Betätigungselements 4 kann auch auf nichtmechanische Art und Weise indirekt erfolgen. Denkbar sind beispielsweise elektrische oder fluidtechnische Betätigungen der Schalter in Form einer Art Fernbedienung oder einer anders ausgebildeten Betätigung der Schalter 31-35. Diese speziellen Ausführungsformen der Erfindung können noch weitere Vorteile bei extremen Umgebungsbedingungen bereitstellen. Die mechanische direkte Kopplung über ein Betätigungselement 4, welches Schaltauslöser 41-45 aufweist, die die Schalter 31-35 der Schaltereinheit 3 direkt auslösen, ist jedoch in vielen Anwendungsfällen zu bevorzugen.

Die Form und Gestalt der Nocken als Schaltauslöser 41-45 der Nockenwelle 6 kann anders als in den Ausführungsbeispielen dargestellt sein. Beispielsweise können die Nocken eine anders geformte Abrundung der Erhebung und Vertiefung aufweisen. Auch können die Schaltauslöser 41-45 anstatt von Nocken einfache Vorsprünge, Vertiefungen oder Ausbuchtungen sein, welche mit entsprechenden Elementen an den Schaltern 31-35 für ein Umschalten der Schalter der Schaltereinheit 3 zusammenwirken.

## Patentansprüche

1. Vorrichtung (10) zur Stellungserfassung einer Drehstellung von beweglichen Teilen von hydraulischen oder elektrohydraulischen Antrieben mit einer Antriebswelle, welche unter extremen Umgebungsbedingungen wie bei sehr tiefen Temperaturen und bei einer Explosionsgefahr funktionssicher sind, bei welcher ein mit der Antriebswelle verbundenes bewegliches Teil (1) eine Drehbewegung gegenüber einem feststehenden Teil (2) ausführt, mit einer Schaltereinheit (3), welche eine Mehrzahl von in einer Reihe nebeneinanderliegend angeordneten Schaltern (31, 32, 33, 34, 35) umfasst, wobei die Schaltereinheit (3) an dem feststehenden Teil (2) angeordnet ist, und mit einem drehbeweglichen Betätigungselement (4) zur direkten Betätigung der Schalter (31-35) der Schaltereinheit (3) in Abhängigkeit von der relativen Stellung des beweglichen Teils (1), wobei das Betätigungselement (4) eine Mehrzahl von Schaltauslösern (41, 42, 43, 44, 45) entsprechend der Anzahl der Schalter (31-35) der Schaltereinheit (3) aufweist, wobei die Schaltauslöser (41-45) jeweils den Schaltern (31-35) derart durch die Aneinanderreihung und/oder Anordnung zwischen dem beweglichen Teil (1) und dem feststehenden Teil (2) zugeordnet sind, dass eine jeweils festgelegte, eindeutige Kombination von Schaltstellungen der Schalter (31-35) bei jeder relativen Lage zwischen dem beweglichen Teil (1) und dem feststehenden Teil (2) gegeben ist, dass ein Steuermodul mit einer Auswertungseinheit vorgesehen ist, in welcher eine Kodierung der unterschiedlichen Schaltstellungen von den Schaltern (31-35) im Verhältnis zu der relativen Stellung des beweglichen Teils (1) des Antriebs hinterlegt ist, dass die Schalter (31-35) Schalter mit einer einfachen Schaltfunktion in Form von Wechselschaltern oder Mehrfachschaltern sind und dass das drehbewegliche Betätigungselement (4) mechanisch mit dem beweglichen Teil (1) im Hinblick auf die Stellbewegung des Antriebs direkt gekoppelt ist zur mechanischen Übertragung der Drehbewegung der Antriebswelle auf das Betätigungselement (4), so dass entsprechend der Stellbewegung des Antriebs das drehbewegliche Betätigungselement (4) mitbetätigt wird, wobei die Schalter (31-35) mit Schaltflächen oder Schaltelementen zur Verstellung mittels der Schaltauslöser (41-45) in direktem Kontakt versehen sind.

2. Vorrichtung (10) nach Anspruch 1, **dadurch gekennzeichnet, dass** das Betätigungselement (4) als Schaltauslöser (41-45) eine Anzahl von unterschiedlichen Nocken auf einer Nockenwelle (6) umfasst, welche mit den Schaltern (31-35) in Kontakt stehen.

3. Vorrichtung (10) nach einem der vorangegangenen Ansprüche, **dadurch gekennzeichnet, dass** die Schaltereinheit (3) ein einheitlicher Block mit einer Mehrzahl von übereinander oder nebeneinander in festgelegten Positionen angebrachten Schaltern (31-35) ist.

4. Vorrichtung (10) nach einem der vorangegangenen Ansprüche, **dadurch gekennzeichnet, dass** die Kodierung der Schaltstellungen der Schalter (31-35) in dem Steuermodul zu den Drehstellungen des beweglichen Teils (1) des Antriebs in Form einer Gray-Kodierung hinterlegt ist.

5. Vorrichtung (10) nach einem der vorangegangenen Ansprüche, **dadurch gekennzeichnet, dass** die Kodierung der Schaltstellungen der Schalter (31-35) in dem Steuermodul eine quasi-kontinuierliche Abbildung verschiedener diskreter Stellungspunkte eines vordefinierten Stellwegs des Antriebs wiedergibt.

6. Vorrichtung (10) nach einem der vorangegangenen Ansprüche, **dadurch gekennzeichnet, dass** die Kodierung der Schaltstellungen der Schalter (31-35) in dem Steuermodul in regelmäßigen Abständen über einen vordefinierten Stellweg des Antriebs hinweg verteilte Stellungspunkte abbildet.

7. Vorrichtung (10) nach einem der vorangegangenen Ansprüche, **dadurch gekennzeichnet, dass** die Kodierung der Schaltstellungen der Schalter (31-35) in dem Steuermodul sich über den Stellweg des Antriebs variierende Positionen an dem Stellweg des beweglichen Teils (1) des Antriebs wiedergibt.

8. Vorrichtung (10) nach einem der vorangegangenen Ansprüche, **dadurch gekennzeichnet, dass** in dem Steuermodul ein Auswertungsschaltkreis hinterlegt ist, welcher eine Extrapolation von der Stellung des beweglichen Teils (1) im Verhältnis zu dem feststehenden Teil (2) auf Basis von bisher erfassten Schaltstellungen der Schalter (31-35) ermöglicht.

9. Vorrichtung (10) nach einem der vorangegangenen Ansprüche, **dadurch gekennzeichnet, dass** zwei oder mehrere Schaltereinheiten (3) mit einer Mehrzahl von jeweiligen Schaltern (31-35) an einem beweglichen Teil (1) oder einem mit dem beweglichen Teil (1) direkt mechanisch gekoppelten Element der Vorrichtung (10) angeordnet sind.

10. Vorrichtung (10) nach einem der vorangegangenen Ansprüche, **dadurch gekennzeichnet, dass** das Betätigungselement (4) Schaltauslöser (41-45) auf Basis einer nichtmechanischen Auslösungstechnik, insbesondere einer fluidtechnischen, elektrischen oder magnetischen Betätigung, aufweist.

11. Vorrichtung (10) nach einem der vorangegangenen Ansprüche, **dadurch gekennzeichnet, dass** die Schaltauslöser (41-45) des Betätigungselements (4) oder die Schalter (31-35) ein Mittel (5) zur Reibungsreduzierung, insbesondere eine Rolle oder ein Gleitelement, umfassen.

12. Vorrichtung (10) nach einem der vorangegangenen Ansprüche, **dadurch gekennzeichnet, dass** eine mechanische Kopplung in Form eines Getriebes, Zahnelements oder von Zahnrädern zwischen einem Antriebselement des beweglichen Teils (1) und dem am feststehenden Teil (2) vorhandenen Betätigungselement (4) vorgesehen ist.

13. Hydraulischer oder elektrohydraulischer Antrieb für die Betätigung von Armaturen, insbesondere Klappen, Kugelhähnen oder Ventilen, über einen vordefinierten Stellweg zwischen insbesondere einer Öffnungsstellung und einer Schließstellung mit einer relativen Bewegung eines beweglichen Teils (1) des Antriebs im Verhältnis zu einem feststehenden Teil (2), **dadurch gekennzeichnet, dass** eine Vorrichtung (10) zur Stellungserfassung einer Drehstellung für den beweglichen Teil (1) des Antriebs nach einem der Ansprüche 1 bis 12 umfasst ist.

14. Antrieb nach Anspruch 13, wobei der Antrieb ein hydraulischer Antrieb für Drehbewegungen von rotierenden Armaturen wie Klappen, Kugelhähnen oder Ventilen ist, **dadurch gekennzeichnet, dass** das bewegliche Teil (1) des Antriebs eine rotierende Antriebswelle ist und dass die Vorrichtung (10) zwischen der Antriebswelle und einem feststehenden Teil (2) des Antriebs montiert ist.

## Claims

1. A device (10) for detecting a position of a rotation position of movable parts of hydraulic or electrohydraulic drives having a drive shaft which are functionally safe under extreme ambient conditions like at very low temperatures and in case of risk of explosion, wherein a movable part (1) connected to the drive shaft performs a rotation movement in relation to a stationary part (2), with a switching unit (3) which comprises a plurality of switches (31, 32, 33, 34, 35) arranged in a row adjacent to one another, wherein the switching unit (3) is arranged at the stationary part (2), and with a rotatable actuating member (4) for direct actuation of the switches (31-35) of the switching unit (3) depending on the relative position of the movable part (1), wherein the actuating member (4) has a plurality of switch triggers (41, 42, 43, 44, 45) corresponding to the number of switches (31-35) of the switching unit (3),
wherein
the switch triggers (41-45) are each allocated to the switches (31-35) through the setting in a row and/or arrangement between the movable part (1) and the stationary part (2), such that in each case a determined, clear combination of switch positions of the switches (31-35) at each relative position between the movable part (1) and the stationary part (2) is given, a control module with an evaluation unit is provided, in which there is stored a coding of the different switch positions of the switches (31-35) in relation to the relative position of the movable part (1) of the drive, the switches (31-35) are switches with a simple switch function in the form of changeover switches or multiple switches, and the rotatable actuating member (4) is mechanically directly coupled with the movable part (1) with regard to a travel movement of the drive for mechanically transmitting the rotary movement of the drive shaft to the actuating element (4), so that the rotary actuating element (4) is also actuated in accordance with the actuating movement of the drive, wherein the switches (31-35) are provided with switch areas or switch members for displacement by means of the switch triggers (41-45) in direct contact.

2. Device (10) according to claim 1, **characterized in that** the actuating member (4) as the switch triggers (41-45) comprises a number of different cams on a cam shaft (6), which are in contact with the switches (31-35).

3. Device (10) according to one of the preceding claims **characterized in that** the switching unit (3) is a uniform block with a plurality of switches (31-35) mounted above one another or adjacent to one another in predetermined positions.

4. Device (10) according to one of the preceding claims, **characterized in that** the coding of the switch positions of the switches (31-35) with regard to rotation positions of the movable part (1) of the drive is stored in the control module in form of a Gray-coding.

5. Device (10) according to one of the preceding claims, **characterized in that** the coding of the switch positions of the switches (31-35) in the control module represents a quasi-continuous image of different discrete position points of a predefined travel path of the drive.

6. Device (10) according to one of the preceding claims, **characterized in that** the coding of the switch positions of the switches (31-35) in the control module displays position points distributed in regular distances over a predefined travel path of the drive.

7. Device (10) according to one of the preceding claims, **characterized in that** the coding of the switch positions of the switches (31-35) in the control module represents positions varying over the travel path of the drive, at the travel path of the movable part (1) of the drive.

8. Device (10) according to one of the preceding claims, **characterized in that** in the control module an evaluation circuit is stored, which makes possible an extrapolation from the position of the movable part (1) in relation to the stationary part (2) based on previously detected switch positions of the switches (31-35).

9. Device (10) according to one of the preceding claims, **characterized in that** two or more switching units (3) are arranged with a plurality of switches (31-35) in each case at a movable part (1) or at a member of the device (10) mechanically coupled directly with the movable part (1).

10. Device (10) according to one of the preceding claims, **characterized in that** the actuating member (4) has switch triggers (41-45) based on a non-mechanical trigger technology, in particular a fluid-technological, electrical or magnetic actuation.

11. Device (10) according to one of the preceding claims, **characterized in that** the switch triggers (41-45) of the actuating member (4) or the switches (31-35) comprise a means (5) for friction reduction, in particular a roller or a sliding member.

12. Device (10) according to one of the preceding claims, **characterized in that** a mechanical coupling in form of a gear, toothed element or of toothed wheels is provided between a drive member of the movable part (1) and the actuating member (4) located at the stationary part (2).

13. Hydraulic or electrohydraulic drive for the actuation of fittings, in particular doors, ball valves or valves over a predefined travel path between in particular an opening position and a closing position with a relative movement of a movable part (1) of the drive in relation to a stationary part (2),**characterized in that** a device (10) for detecting the position of a rotation position is comprised for the movable part (1) of the drive according to one of the claims 1 to 12.

14. Drive according to claim 13, wherein the drive is a hydraulic drive for rotation movements of rotating fittings like doors, ball valves or valves, **characterized in that** the movable part (1) of the drive is a rotating drive shaft and that the device (10) is mounted between the drive shaft and a stationary part (2) of the drive.

## Revendications

1. Dispositif (10) de détection de la position angulaire d'un élément mobile d'un actionneur hydraulique ou électrohydraulique comprenant un arbre d'entraînement, fonctionnant de manière fiable dans des conditions environnementales extrêmes telles que des températures très basses ou en atmosphère explosive, dans lequel un élément mobile (1) solidaire de l'arbre d'entraînement effectue un mouvement de rotation par rapport à un élément fixe (2), comportant une unité de commutation (3) comprenant une pluralité d'interrupteurs (31, 32, 33, 34, 35) disposés côte à côte en ligne, ladite unité de commutation (3) étant fixée à l'élément fixe (2), et un élément d'actionnement rotatif (4) destiné à actionner directement les interrupteurs (31 à 35) de l'unité de commutation (3) en fonction de la position relative de l'élément mobile (1), dans lequel l'élément d'actionnement (4) comporte une pluralité de déclencheurs de commutation (41, 42, 43, 44, 45) correspondant au nombre d'interrupteurs (31 à 35) de l'unité de commutation (3), dans lequel lesdits déclencheurs de commutation (41 à 45) sont respectivement associés aux interrupteurs (31 à 35) par leur alignement et/ou leur positionnement entre l'élément mobile (1) et l'élément fixe (2) de telle sorte qu'une combinaison déterminée et unique de positions de commutation des interrupteurs (31 à 35) soit attribuée à chaque position relative entre l'élément mobile (1) et l'élément fixe (2), un module de commande comprenant une unité d'évaluation étant prévu, ladite unité d'évaluation comportant un codage des différentes positions de commutation des interrupteurs (31 à 35) en fonction de la position relative de l'élément mobile (1) de l'actionneur, les interrupteurs (31 à 35) étant des interrupteurs à fonction de commutation simple, sous forme d'interrupteurs à bascule ou d'interrupteurs multiples, et l'élément d'actionnement rotatif (4) étant mécaniquement couplé directement à l'élément mobile (1) afin de transmettre mécaniquement le mouvement de rotation de l'arbre d'entraînement à l'élément d'actionnement (4), de sorte que l'élément d'actionnement rotatif (4) soit entraîné en fonction du mouvement de commande de l'actionneur, les interrupteurs (31 à 35) étant munis de surfaces ou d'éléments de commutation en contact direct avec les déclencheurs de commutation (41 à 45).

2. Dispositif (10) selon la revendication 1, **caractérisé en ce que** l'élément d'actionnement (4) comprend, en tant que déclencheurs de commutation (41 à 45), un certain nombre de cames différentes disposées sur un arbre à cames (6), en contact avec les interrupteurs (31 à 35).

3. Dispositif (10) selon l'une des revendications précédentes, **caractérisé en ce que** l'unité de commutation (3) est un bloc unique comprenant plusieurs interrupteurs (31 à 35) disposés superposés ou côte à côte à des positions prédéterminées.

4. Dispositif (10) selon l'une des revendications précédentes, **caractérisé en ce que** le codage des positions de commutation des interrupteurs (31 à 35) dans le module de commande est enregistré sous forme d'un codage de Gray en relation avec les positions angulaires de l'élément mobile (1) de l'actionneur.

5. Dispositif (10) selon l'une des revendications précédentes, **caractérisé en ce que** le codage des positions de commutation des interrupteurs (31 à 35) dans le module de commande représente une cartographie quasi-continue de différents points de position discrets le long d'un trajet de commande prédéfini de l'actionneur.

6. Dispositif (10) selon l'une des revendications précédentes, **caractérisé en ce que** le codage des positions de commutation des interrupteurs (31 à 35) dans le module de commande représente des points de position répartis à intervalles réguliers sur un trajet de commande prédéfini de l'actionneur.

7. Dispositif (10) selon l'une des revendications précédentes, **caractérisé en ce que** le codage des positions de commutation des interrupteurs (31 à 35) dans le module de commande représente des positions variables le long du trajet de commande de l'élément mobile (1) de l'actionneur.

8. Dispositif (10) selon l'une des revendications précédentes, **caractérisé en ce qu'**un circuit d'évaluation est enregistré dans le module de commande, lequel permet une extrapolation de la position de l'élément mobile (1) par rapport à l'élément fixe (2) sur la base des positions de commutation précédemment détectées des interrupteurs (31 à 35).

9. Dispositif (10) selon l'une des revendications précédentes, **caractérisé en ce que** deux unités de commutation (3) ou davantage, comportant chacune une pluralité d'interrupteurs (31 à 35), sont disposées sur un élément mobile (1) ou sur un élément de la structure du dispositif (10) directement couplé mécaniquement audit élément mobile (1).

10. Dispositif (10) selon l'une des revendications précédentes, **caractérisé en ce que** l'élément d'actionnement (4) comporte des déclencheurs de commutation (41 à 45) fonctionnant selon une technologie d'activation non mécanique, notamment une activation fluidique, électrique ou magnétique.

11. Dispositif (10) selon l'une des revendications précédentes, **caractérisé en ce que** les déclencheurs de commutation (41 à 45) de l'élément d'actionnement (4) ou les interrupteurs (31 à 35) comportent un moyen (5) de réduction de frottement, notamment un rouleau ou un élément de glissement.

12. Dispositif (10) selon l'une des revendications précédentes, **caractérisé en ce qu'**un couplage mécanique est prévu entre un élément d'entraînement de l'élément mobile (1) et l'élément d'actionnement (4) présent sur l'élément fixe (2), ledit couplage étant sous forme d'un engrenage, d'un élément denté ou de roues dentées.

13. Actionneur hydraulique ou électrohydraulique destiné à la ma-nœuvre d'organes de robinetterie, notamment de volets, de robinets à boisseau sphérique ou de vannes, sur un trajet de commande prédéfini entre notamment une position d'ouverture et une position de fermeture, avec un mouvement relatif d'un élément mobile (1) de l'actionneur par rapport à un élément fixe (2), **caractérisé en ce qu'**il comprend un dispositif (10) selon l'une quelconque des revendications 1 à 12 pour la détection de la position angulaire de l'élément mobile (1) de l'actionneur.

14. Actionneur selon la revendication 13, ledit actionneur étant un actionneur hydraulique pour le mouvement de rotation d'organes de robinetterie rotatifs tels que des volets, des robinets à boisseau sphérique ou des vannes, **caractérisé en ce que** l'élément mobile (1) de l'actionneur est un arbre d'entraînement rotatif et **en ce que** le dispositif (10) est monté entre l'arbre d'entraînement et un élément fixe (2) de l'actionneur.
